(19) Europäisches Patentamt / European Patent Office / Office européen des brevets

(11) **EP 3 886 596 B1**

(12) **EUROPEAN PATENT SPECIFICATION**

(45) Date of publication and mention
of the grant of the patent:
**20.03.2024 Bulletin 2024/12**

(21) Application number: **19798242.4**

(22) Date of filing: **31.10.2019**

(51) International Patent Classification (IPC):
**A23G 9/32** *(2006.01)*     **A23G 9/34** *(2006.01)*

(52) Cooperative Patent Classification (CPC):
**A23G 9/34; A23G 9/327**

(86) International application number:
**PCT/EP2019/079917**

(87) International publication number:
**WO 2020/108914 (04.06.2020 Gazette 2020/23)**

(54) **FROZEN CONFECTION**

GEFRORENES KONFEKT

CONFISERIE SURGELÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2018 EP 18209263**

(43) Date of publication of application:
**06.10.2021 Bulletin 2021/40**

(73) Proprietor: **Unilever IP Holdings B.V.
3013 AL Rotterdam (NL)**

(72) Inventors:
• **MAYES, Daniel, Matthew
Bedford, Bedfordshire MK44 1LQ (GB)**

• **MUTLU, Hatice, Sena
Bedford, Bedfordshire MK40 1TH (GB)**

(74) Representative: **Askew, Sarah Elizabeth
Unilever Patent Group
Bronland 14
6708 WH Wageningen (NL)**

(56) References cited:
EP-A1- 1 650 133          WO-A1-2005/095228
WO-A1-2006/007921     WO-A1-2013/092495
WO-A1-2016/075016     WO-A1-2016/075017
WO-A1-2016/167660     WO-A1-2017/133863
WO-A2-03/096821          US-A1- 2011 300 264

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to frozen confections such as ice cream. In particular, the invention relates to frozen confections that are formulated to be dispensed from containers at low temperatures.

**Background of the invention**

In recent years, systems for dispensing frozen confections such as ice cream have been developed in which pre-packaged ice cream is provided in containers that can be squeezed by hand to extrude the confection. In particular pouch-based systems have been developed.

US 2009/0208630 A discloses a spout pouch ice cream and frozen yogurt manufacturing method and a device capable of injecting ice cream after an overrun process through a narrow drinking tube of the spout pouch.

WO 2006/007921 A1 discloses a method of serving a slushy drink wherein a manufactured slush is filled into a container.

Further systems for dispensing frozen confections such as soft ice cream have also been developed in which pre-packaged ice cream is delivered from a container by a dispensing device. In particular systems which employ bag-in-bottle type containers or piston-type cartridges have been developed.

WO 2013/124193 A discloses a method for dispensing a frozen confection comprising: providing a refrigerated, insulated chamber, which houses at least one container, containing a frozen confection at a temperature of -12 °C or below; wherein the at least one container has an outlet which is closed by a self-closing valve; wherein the container comprises a flexible bag containing the frozen confection located inside a bottle; pressurising gas in the region inside the bottle and outside the flexible bag thereby applying pressure to the frozen confection so that the valve opens and the frozen confection is forced out of the container through the outlet; releasing the pressure so that the valve closes.

Such systems typically employ frozen confections that are specifically formulated to be dispensed at the desired low temperatures.

US 2004/0161503 A discloses a frozen product comprising a cartridge containing a frozen aerated confection having an overrun of above 20 percent and below 100 percent, and containing less than 1.5 percent w/w glycerol, freezing point depressants in an amount of between 25 percent and 37 percent w/w, and between 2 and 12 percent fat, wherein the freezing point depressants have a number average molecular weight $<M>_n$ of less than 300. The frozen aerated confection has a soft structure and can be extruded from the cartridge at -18 degrees centigrade.

WO 03/096821 A discloses a frozen aerated product in a container, the container having at least two compartments (A) and (B), said compartments being gastighlty separated from each other by an at least partially movable wall, compartment (A) containing a propellant and compartment (B) containing the frozen aerated product, compartment (B) being provided with a valve, wherein the frozen aerated product contains freezing point depressants in an amount of between 20 percent and 40 percent w/w and between 0 percent and 15 percent fat, the freezing point depressants having a number average molecular weight $<M>_n$ following a certain condition.

WO 2017/133863 A discloses a frozen confection comprising freezing point depressants in an amount of from 25 to 35 percent by weight of the frozen confection, wherein the number average molecular weight of the freezing point depressants is from 200 to 250 g mol$^{-1}$, and wherein the freezing point depressants comprise erythritol in an amount of from 0.25 to 7 percent by weight of the frozen confection.

The present inventors have now recognized that there is a need for improvements in formulations for use in systems for dispensing frozen confections like soft ice. In particular the present inventors have found that there is a need for confections which are extrudable at the temperature of a domestic freezer but are tolerant to temperature abuse in a frozen supply chain. The inventors have found that improved confections can be provided when they are formulated with specific emulsifiers in combination with specific amount and type of freezing point depressants.

**Summary of the invention**

In a first aspect, the present invention is directed to a frozen confection comprising:

- freezing point depressants in an amount of from 20 to 40% by weight of the frozen confection, wherein the number average molecular weight $<M>_n$ of the freezing point depressants is less than 230 g mol$^{-1}$; and
- lactic acid ester of mono and/or diglyceride.

The frozen confection of the present invention is formulated to be extrudable and yet stable at a range of temperatures encountered in domestic and commercial freezers operating, for example, at temperature of -10 °C or below.

The amount of ice in the product is determined, to a large extent by the amount and molecular weight of the freezing point depressants. If the amount of ice is too high, then the confection becomes too difficult to extrude at low temperatures found in some storage freezers. Thus the freezing point depressants have a number average molecular weight $<M>_n$ of less than 230 g mol$^{-1}$, and are present in an amount of at least 20% by weight of the frozen confection. More preferably the amount of freezing point depressants is at least 25%, even more preferably at least 26% and most preferably at least 27% by weight of the frozen confection.

Preferably the number average molecular weight $<M>_n$ of the freezing point depressants is no more than 220 g mol$^{-1}$.

On the other hand if the amount of freezing point depressants becomes too high and/or their molecular weight becomes too low then the rheology will very liquid-like at higher temperatures encountered in some storage freezers. Thus the freezing point depressants are present in an amount of less than 40% by weight of the frozen confection. Preferably the amount of freezing point depressants is no more than 35%, more preferably no more than 34%, more preferably still no more than 33% and most preferably no more than 32% by weight of the frozen confection.

Preferably the number average molecular weight $<M>_n$ of the freezing point depressants is no less than 200, more preferably no less than 205, more preferably still no less than 208 and most preferably no less than 210 g mol$^{-1}$.

For the purposes of the present invention, the average molecular weight for a mixture of freezing point depressants is defined by the number average molecular weight $<M>_n$ (Equation1). Where $w_i$ is the mass of species i, $M_i$ is the molar mass of species i and $N_i$ is the number of moles of species i of molar mass $M_i$.

$$<M>_n = \frac{\sum w_i}{\sum (w_i / M_i)} = \frac{\sum N_i M_i}{\sum N_i}$$

(Equation 1)

Freezing point depressants as defined in this invention consist in:

- monosaccharides and disaccharides
- oligosaccharides containing from three to ten monosaccharide units joined in glycosidic linkage.
- corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight $<M>_n$ can be calculated from Equation 2 below. (Journal of Food Engineering, 33 (1997) 221-226)

$$DE = \frac{18016}{<M>_n}$$

(Equation 2)

- erythritol, arabitol, glycerol, xylitol, sorbitol, mannitol, lactitol and malitol.
- ethanol.

Erythritol is particularly effective at imparting the desired rheological properties to the frozen confection. In addition, in comparison to some other sugar alcohols, erythritol does not impart an unpleasant off-taste, is not overly sweet and does not interfere with natural digestion and excretion of food. Thus it is preferred that the freezing point depressants comprise erythritol.

Preferably the amount of erythritol is at least 0.25%, more preferably at least 0.5%, even more preferably at least 0.7% and most preferably at least 1% by weight of the frozen confection.

Preferably the amount of erythritol is not too high, otherwise the confection may be too liquid-like and/or it may be difficult to formulate the confection with the desired sweetness. Thus it is preferred that the amount of erythritol is no more than 7%, more preferably no more than 6%, even more preferably no more than 5%, more preferably still no more than 4% and most preferably no more than 3% by weight of the frozen confection.

Other than erythritol, it is preferred that the freezing point depressants are substantially comprised of saccharides. Preferably the freezing point depressants comprise at least 90% by weight of the freezing point depressants of mono, di and oligosaccharides, more preferably at least 92%. The total amount of mono, di and oligosaccharides and erythritol in the freezing point depressants is preferably at least 98% by weight of the freezing point depressants, more preferably 99 to 100%.

An especially preferred disaccharide is lactose as this provides freezing point depression without imparting a high amount of sweetness. Preferably the freezing point depressants comprise lactose in an amount of at least 5% by weight of the freezing point depressants, more preferably from 10 to 25% by weight of the freezing point depressants. The lactose may be present in the confection as part of milk solids and/or added separately from milk solids.

Certain freezing point depressants are undesirable as they impart unwanted taste and/or physiological effects.

Preferably the frozen confection comprises less than 0.5% ethanol by weight of the frozen confection, more preferably less than 0.1% and more preferably still less than 0.01%, and most preferably 0%.

Preferably the frozen confection comprises less than 1.5% glycerol by weight of the frozen confection, more preferably less than 1% and more preferably still less than 0.5%, and most preferably from 0.2 to 0%. Additionally or alternatively the total amount of arabitol, glycerol, xylitol, sorbitol, mannitol, lactitol and malitol in the frozen confection is less than 1.5% by weight of the frozen confection, more preferably less than 1% and more preferably still less than 0.5%, and most preferably from 0.2 to 0%.

Preferably the frozen confection comprises less than 5% fructose by weight of the frozen confection, more preferably less than 3% and most preferably from 0 to 2%.

Preferably the freezing point depressant impart the desired sweetness to the frozen confection without the need to use intense sweetener. By "intense sweetener" is meant one or more of aspartame, saccharin, acesulfame K, alitame, thaumatin, cyclamate, glycyrrhizin, stevioside, neohesperidine, sucralose, monellin, and neotame. Preferably the frozen confection is substantially free from intense sweetener. More preferably the frozen confection comprises intense sweetener in an amount less than the amount required to impart an equivalent sweetness as 1% sucrose, more preferably less than the amount required to impart an equivalent sweetness as 0.5% sucrose, and most preferably less than the amount required to impart an equivalent sweetness as 0.1% sucrose. Additionally or alternatively, the frozen confection comprises less than 0.003% intense sweetener, more preferably less than 0.001% and most preferably from 0.0001 to 0%.

The present inventors have found that frozen confections that are formulated with specific amounts and types of freezing point depressants as hereinabove described are very sensitive to temperature fluctuations encountered, for example, in a distribution chain. Without wishing to be bound by theory, the inventors believe that the very factors that allow for easy extrusion at low temperatures, confer poor microstructural stability at elevated temperatures, even if the confection remains frozen. The present inventors have found that this instability may be ameliorated by employing an emulsifier system in the frozen confection that comprises lactic acid ester of mono-diglyceride.

Lactic acid ester of mono and/or diglyceride is often known by the generic name of LACTEM. Especially preferred are those supplied by Danisco under the Grinstead® brand such as GRINSTEAD® LACTEM P 22 MB.

Preferably the frozen confection comprises lactic acid ester of mono and/or diglyceride (LACTEM) in a total amount of at least 0.05% by weight of the frozen confection, more preferably at least 0.1% and most preferably at least 0.2%.

Preferably the frozen confection comprises lactic acid ester of mono and/or diglyceride (LACTEM) in a total amount of no more than 2% by weight of the frozen confection, more preferably no more than 1% and most preferably no more than 0.6%.

Aerated frozen confections are especially sensitive to temperature-abuse as the finely dispersed air bubbles created during manufacture can easy ripen, coalesce and channel at elevated temperature. The present inventors have found, however that LACTEM is effective at provided increased cold-chain stability to even aerated frozen confections. Thus it is preferred that the frozen confection is aerated.

By "aerated" is meant that the confection has an overrun of at least 30%. More preferably the frozen aerated confection has an overrun of from 50 to 135%, most preferably from 70 to 120% and most preferably from 80 to 120%.

Overrun (OR) is defined by the following Equation 3

$$OR = \frac{volume..of..frozen..confection - volume..of..premix..at..ambient..temp}{volume..of..premix..at..ambient..temp} \times 100$$

(Equation 3)

It is measured at atmospheric pressure and where the frozen confection is in a container it is measured before extrusion from the container. Ambient temperature is 20 °C.

The frozen confection preferably comprises fat in an amount of from 1 to 15% by weight of the frozen confection, more preferably from 4 to 12%, and most preferably from 5 to 10%.

The frozen confection preferably comprises protein in an amount of from 0.5 to 8% by weight of the frozen confection, more preferably from 1 to 6%, and most preferably from 1.5 to 5%.

The frozen confection is typically made by freezing a mix (more preferably a pasteurized mix) of ingredients such as water, freezing point depressants, LACTEM and optionally other ingredients such as fat, protein (normally milk proteins), additional emulsifiers, stabilisers, colours and flavours. Frozen confections include ice cream, gelato, frozen yoghurt, sorbets, granitas, shaved ices and the like. Preferably the frozen confection is ice cream.

The frozen confection is formulated to be dispensed from a container. Thus in a second aspect the present invention is directed to a frozen product comprising a container comprising a product compartment containing the frozen confection according to any embodiment of the first aspect, wherein the product compartment comprises a product outlet and a moveable wall through which a dispensing force can be transmitted to urge the frozen confection through the product outlet.

The moveable wall is such that a dispensing force can be transmitted through the wall to the frozen confection. Examples of containers comprising a moveable wall include bag-in-bottles (where the bag acts as the moveable wall) and cartridges containing pistons (where the piston acts as the moveable wall) although other configurations are possible including, for example, containers with an end wall that is deformable to become the moveable wall (as described, for example in US 5,893,485). Examples of bag-in-bottle type containers are described in WO 2007/039158 A and examples of piston-in-cartridge type containers are described in EP 1 449 441 A both of which documents are hereby incorporated by reference in their entirety. In a preferred embodiment the container is a bag-in-bottle.

In one embodiment the container is adapted such that the wall is moveable on application of hand pressure. For example the container may comprise a flexible pouch that is squeezable by hand.

The shape and configuration of the pouch have been found to affect the ease of dispensing. In this respect it is preferred that where the container is a flexible pouch, the moveable wall delimits the product compartment and extends in a longitudinal direction from a base end to a top end of the pouch, wherein the top end comprises the product outlet, and wherein:

- the base end comprises a gusset extending in a transverse direction;
- the top end comprises a top edge extending in the transverse direction; and;
- the product outlet is disposed at or proximal to a corner of the top edge.

By providing such a frozen product, the present inventors have found that consumers are inclined to grip and squeeze the pouch at the gusseted base end (which is usually the thickest part of the pouch) which means that the dispensing force is consistently directed towards the top end where the product outlet is located. Furthermore, unlike, for example the pouch disclosed in US 2009/0208630 A, the product outlet is disposed at or proximal to a corner of the top edge. The present inventors have found that where the product outlet is at the centre of the top edge (as in US 2009/0208630 A), consumers are inclined to grip and squeeze the pouch at the side edges which directs the dispensing force both towards the top and base ends and can lead to choking of the flow and residual frozen confection in the base end.

Preferably the pouch comprises side edges, each at opposite extremes of the gusset and extending in the longitudinal direction as this further allows for the gusseted base end being the thickest part of the pouch. To further dissuade holding and squeezing of the pouch by the side edges, it is preferred that at least one of the side edges comprises an indented portion, more preferably each of the side edges comprise an indented portion.

The present inventors have found that the force needed to dispense the frozen confection from the container is attainable with hand pressure when the size of the container is not too large.

Preferably the product compartment has a volume of no more than 500 ml, more preferably no more than 475 ml, most preferably no more than 450 ml. Additionally or alternatively, preferably the product compartment is filled with no more than 325 g of frozen confection, more preferably no more than 275 g and most preferably no more than 250 g.

The volume of the product compartment should be sufficient to hold at least one serving of frozen confection. Preferably, however, the product compartment contains multiple servings of frozen confection. Therefore it is preferred that the product compartment has a volume of at least 100 ml, more preferably at least 250 ml, more preferably still at least 275 ml and most preferably at least 300 ml. Additionally or alternatively, the product compartment is filled with at least 50 g of frozen confection, more preferably at least 100 g, more preferably still at least 150 g and most preferably at least 175 g.

The product outlet could take any form such as a simple orifice. Preferably, however the outlet is in the form of a spout as this allows for more controlled dispensing, for example into an ice cream cone or other receptacle. To reduce the amount of force required to be applied to extrude the confection, it is preferred that the spout has an inner diameter of at least 10 mm, more preferably at least 12 mm and most preferably from 15 to 35 mm.

In a yet a further aspect, the present invention provides a method for dispensing a frozen confection from a container, the method comprising the steps of:

(a) providing a frozen product as described in any embodiment of the second aspect; and
(b) applying force to the container to deform the wall and thereby urge the frozen confection in the product compartment towards the outlet and extrude at least a portion of frozen confection therefrom.

Preferably the force is manual force. Where the container comprises a flexible pouch it is preferred that the manual force is applied at least at a base end of the pouch.

Typically the container is stored in a domestic or commercial freezer between dispensing occasions. Thus it is preferred that between dispensing portions of the frozen confection, the container is stored in a freezer at a temperature of less than -10 °C, more preferably at a temperature of from -14 to -25 °C, and most preferably from -16 to -22 °C.

Except in the Examples, all numbers in this description indicating amounts of material, time periods, length scales, conditions of reaction, physical properties of materials and/or use may optionally be understood as modified by the word "about".

For the avoidance of doubt, the word "comprising" is intended to mean "including" but not necessarily "consisting of" or "composed of". In other words, the listed steps or options need not be exhaustive.

Where a feature is disclosed with respect to a particular aspect of the invention such disclosure is also to be considered to apply to any other aspect of the invention *mutatis mutandis.*

## Brief description of the drawings

The present invention will now be described with reference to the figures, wherein:

Figure 1a shows a front view of an embodiment of a frozen product of the invention.
Figure 1b shows a side view of the frozen product of Figure 1a.
Figure 1c shows a bottom view of the frozen product of Figure 1a.
Figure 2 shows the frozen product of Figure 1 being used to dispense a portion of frozen confection into a cone.
Figure 3 shows a front view of another embodiment of a frozen product of the invention.

## Detailed description

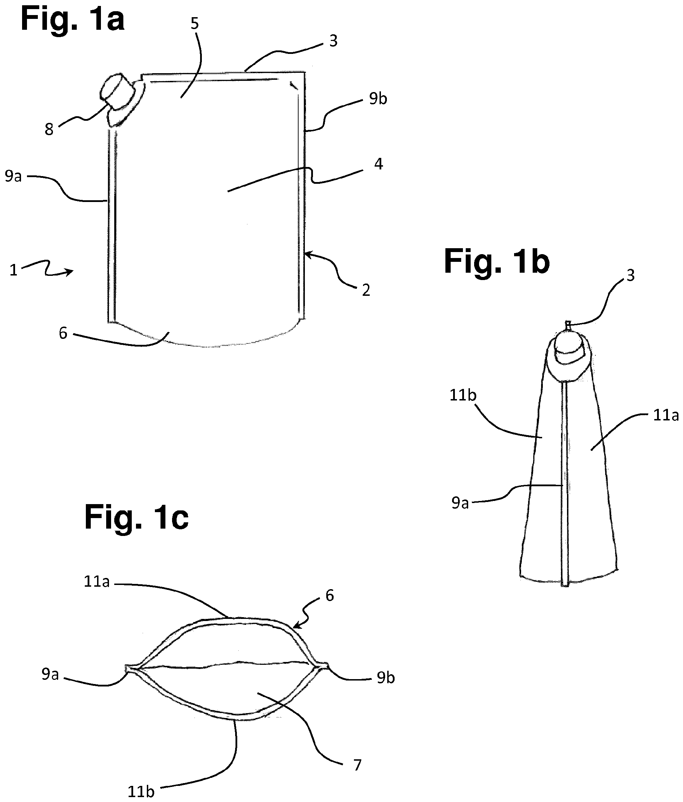

Figures 1a to 1c show a frozen product (1) according to an embodiment of the invention. The frozen product (1) comprises a flexible pouch (2) which envelopes the frozen confection.

The pouch comprises a wall (4) formed from a sheet of a multilayer polymer laminate film, wherein following formation of a gusset (7), opposing front and back faces (11a, 11b) have been heat-sealed together at side edges (9a, 9b) and a top edge (3) of the wall (4). The pouch extends from a base end (6) in a longitudinal direction to a top end (5). On the underside of the base end (6) is the gusset (7) which forms a base on which the pouch (2) is self-standing on a flat surface. As best seen in Figure 1b, owing to the presence of the gusset (7), the pouch (2) is thickest at the base end (6) and has a thickness that tapers in the longitudinal direction.

At one corner of the top end (5) a product outlet (8) in the form of a spout is sealingly engaged with the wall (4), for example through heat sealing or adhesive. Although not shown, the product outlet (8) is preferably closable by a removable cap.

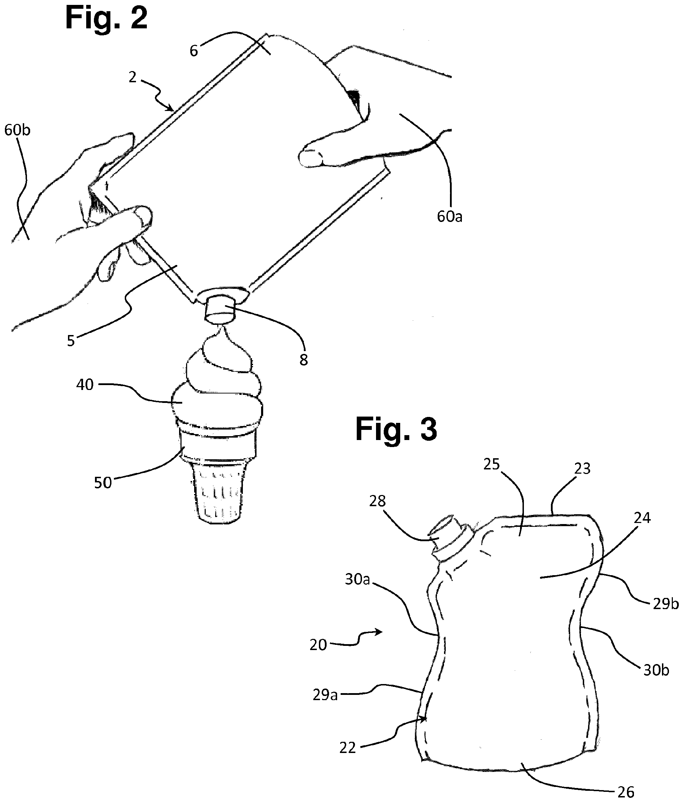

Figure 2 shows the pouch (2) when being used to dispense a portion of frozen confection (40) into a receptacle (50) such as a wafer cone. The specific shape of the pouch is designed to encourage a user to grip and squeeze the base end (6) with a first hand (60a) whilst supporting the top end (5) of the pouch (2) with a second hand (60b) with the nozzle (8) directed towards the receptacle (50). This ensures that the dispensing force consistently urges the frozen confection within the pouch towards the spout (8) and not to other parts of the pouch (2).

Figure 3 shows another embodiment of the frozen product (20) of the invention. The pouch (22) is similar to the pouch (2) shown in Figures 1 and 2 and has a spout (28) and a wall (24) extending in a longitudinal direction from a gusseted base end (26) to a top end (25) and sealed at top (23) and side (29a, 29b) edges. The pouch (22) shown in Figure 3 differs from that of Figures 1 and 2 in that each of the side edges (29a, 29b) comprises an indented portion (30a, 30b) approximately mid-way between the top (25) and bottom (26) ends. The presence of the indented portions (30a, 30b) make gripping of the pouch (22) by the side edges (29a, 29b) for dispensing awkward for a user and so further encourages a user to handle the pouch (20) by the base (26) and top (25) ends during dispensing.

The present invention will now be described, by way of example only, with reference to the following Examples.

EXAMPLE 1

Five ice creams were formulated with varying emulsifier systems as shown in Table 1 (amounts in % w/w).

TABLE 1

|  | 1 | 2 | 3 | 4 | 5 |
|---|---|---|---|---|---|
| Coconut oil | 8.00 | 8.00 | 8.00 | 8.00 | 8.00 |

(continued)

|  | 1 | 2 | 3 | 4 | 5 |
|---|---|---|---|---|---|
| Skimmed milk, powder | 6.90 | 6.90 | 6.90 | 6.90 | 6.90 |
| Low Fructose Corn Syrup (63 DE) | 12.09 | 12.09 | 12.09 | 12.09 | 12.09 |
| Dextrose monohydrate | 13.00 | 13.00 | 13.00 | 13.00 | 13.00 |
| Erythritol | 3.00 | 3.00 | 3.00 | 3.00 | 3.00 |
| Polysaccharide Stabilizers | 0.27 | 0.27 | 0.27 | 0.27 | 0.27 |
| Monodiglyceride[1] | 0.40 | -/- | -/- | -/- | -/- |
| ACETEM (Acetic acid ester of monodiglyceride) [2] | -/- | 0.40 | -/- | -/- | -/- |
| CITREM (Citric acid ester of monodiglyceride)[3] | -/- | -/- | 0.40 | -/- | -/- |
| LACTEM (Lactic acid ester of monodiglyceride)[4] | -/- | -/- | -/- | 0.25 | 0.40 |
| Flavour | 0.28 | 0.28 | 0.28 | 0.28 | 0.28 |
| Colour | 0.01 | 0.01 | 0.01 | 0.01 | 0.01 |
| Water | to 100 | to 100 | to 100 | to 100 | to 100 |

1. DIMODAN® UJ supplied by Danisco.
2. GRINSTEAD® ACETEM 70-00 P MB supplied by Danisco.
3. GRINDSTED® CITREM supplied by Danisco.
4. GRINSTEAD® LACTEM P 22 MB supplied by Danisco.

All of the formulations employed the same amounts and types of freezing point depressants and had a total amount of freezing point depressants of 30 %w/w with $<M>_n$ of 213 g mol$^{-1}$.

The ice creams were prepared by pasteurizing and homogenizing mixes prepared according to the above formulations. The mixes were aged at 4 °C overnight before freezing and aerating in a scraped surface heat exchanger (standard ice cream freezer). The air input to the freezer was controlled to give a target overrun of 100% (actual overrun varied between 92 and 110%). Freezing was controlled to give a target extrusion temperature of -7 °C (actual extrusion temperature varied between -6 and -9 °C).

The mixes were extruded directly into pouches with the shape shown in Figure 3. The pouch wall material was a laminate film comprising polyethylene terephthalate, oriented polyamide and polyethylene layers but without an aluminium layer. The product outlet was a spout with an internal diameter of 22 mm. The capacity of each pouch was 400 ml. An amount of 230 g of ice cream was filled into each pouch through the spout and then a closure cap screwed in place. The pouches were then hardened in a blast freezer and then transferred to a domestic freezer (-18 °C) for several days before testing.

Samples of the pouches were then removed from the freezer and subject to a dispensing force test and an overrun test. The dispensing force was measured by squeezing each pouch between the plates of an Instron® universal testing machine. The overrun was determined by dispensing a set mass of ice cream, hardening the dispensed ice cream by cooling in a dry ice environment and then measuring the volume of ice cream by the amount of water displaced when the hardened sample was submerged in an iced water bath.

The results are shown in Table 2.

TABLE 2

| Formulation | Emulsifier System | Dispensing Force (N) | OR of Dispensed Ice Cream (%) |
|---|---|---|---|
| 1 | 0.40% Monodiglyceride | 250 | 93 |
| 2 | 0.40% ACETEM | 310 | 97 |
| 3 | 0.40% CITREM | 360 | 92 |
| 4 | 0.25% LACTEM | 310 | Not Measured |
| 5 | 0.40% LACTEM | 280 | 96 |

All five formulations were found to give ice creams that could easily be extruded by hand from the pouch (dispensing force less than 600 N) and showed no significant overrun loss.

Samples of each of the ice creams were subjected to temperature abuse in order to simulate the thermal regime encountered in a cold chain. This involved storing pouches in a temperature-controlled cabinet for 14 days wherein during each 24 hours the temperature of the cabinet varied as follows: -20 °C for 11.5 hours, and then +10 °C for 0.5 hours; and then -10 °C for 11.5 hours; and then +10 °C for 0.5 hours. The pouches were then transferred to a domestic freezer (-18 °C) for several days before testing.

The temperature-abused samples were then subjected to the same overrun test as previously described and the results are shown in Table 3.

TABLE 3

| Formulation | Emulsifier System | OR of Dispensed Ice Cream (%) |
|---|---|---|
| 1 | 0.40% Monodiglyceride | 47 |
| 2 | 0.40% ACETEM | 58 |
| 3 | 0.40% CITREM | 44 |
| 4 | 0.25% LACTEM | Not Measured |
| 5 | 0.40% LACTEM | 63 |

All samples showed loss of overrun on dispensing following the temperature abuse. The samples formulated with ACETEM or LACTEM showed the best resistance to structural deterioration on temperature abuse as evidenced by retention of higher amounts of air on dispensing.

Sensory analysis of ice cream dispensed from the temperature-abused pouches containing formulations 2 or 5 showed that the formulation with LACTEM (formulation 5) resulted in dispensed ice cream with a better texture both in terms of eating quality (more body and less icy) and shape retention (better definition of the dispensed "flutes").

## Claims

1. A frozen confection comprising:

   • freezing point depressants in an amount of from 20 to 40% by weight of the frozen confection, wherein the number average molecular weight $<M>_n$ of the freezing point depressants is less than 230 g mol$^{-1}$; and
   • lactic acid ester of mono and/or diglyceride.

2. The frozen confection as claimed in claim 1 wherein the amount of the lactic acid ester of mono and/or diglyceride is from 0.05% to 2% by weight of the frozen confection.

3. The frozen confection as claimed in any one of claim 1 or claim 2 wherein the frozen confection is aerated.

4. The frozen confection as claimed in claim 3 wherein the frozen aerated confection has an overrun of from 50 to 135%.

5. The frozen confection as claimed in any one of the preceding claims wherein the amount of freezing point depressants is from 25 to 35% by weight of the frozen confection.

6. The frozen confection as claimed in claim 5 wherein the amount of freezing point depressants is from 26 to 33% by weight of the frozen confection.

7. The frozen confection as claimed in any one of the preceding claims wherein the number average molecular weight $<M>_n$ of the freezing point depressants is from 200 to 230 g mol$^{-1}$.

8. The frozen confection as claimed in claim 7 wherein the number average molecular weight $<M>_n$ of the freezing point depressants is from 205 to 220 g mol$^{-1}$.

9. The frozen confection as claimed in any one of the preceding claims wherein the freezing point depressants comprise erythritol.

10. The frozen confection as claimed in claim 9 wherein the frozen confection comprises erythritol in an amount of from 0.25 to 7% by weight of the frozen confection.

11. The frozen confection as claimed in any one of the preceding claims wherein the freezing point depressants comprise at least 90% by weight of the freezing point depressants of mono, di and oligosaccharides.

12. The frozen confection as claimed in claim 11 wherein the freezing point depressants comprise at least 92% by weight of the freezing point depressants of mono, di and oligosaccharides.

13. The frozen confection as claimed in claim 12 wherein the total amount of mono, di and oligosaccharides and erythritol in the freezing point depressants is at least 98% by weight of the freezing point depressants, preferably 99 to 100%.

14. A frozen product comprising a container comprising a product compartment containing the frozen confection as claimed in any one of claims 1 to 13, wherein the product compartment comprises a product outlet and a moveable wall through which a dispensing force can be transmitted to urge the frozen confection through the product outlet.

15. A method for dispensing a frozen confection from a container, the method comprising the steps of:

(a) providing a frozen product as claimed in claim 14; and
(b) applying force to the container to deform the wall and thereby urge the frozen confection in the product compartment towards the outlet and extrude at least a portion of frozen confection therefrom.


**Patentansprüche**

1. Gefrorenes Konfekt, umfassend:

• Gefrierpunktserniedriger in einer Menge von 20 bis 40 Gewichts-% des gefrorenen Konfekts, wobei das zahlenmittlere Molekulargewicht $<M>_n$ der Gefrierpunktserniedriger weniger als 230 g mol$^{-1}$ beträgt; und
• Milchsäureester von Mono- und/oder Diglycerid.

2. Gefrorenes Konfekt, wie im Anspruch 1 beansprucht, wobei die Menge des Milchsäureesters von Mono- und/oder Diglycerid 0,05 bis 2 Gewichts-% des gefrorenen Konfekts beträgt.

3. Gefrorenes Konfekt, wie in irgendeinem der Ansprüche 1 oder 2 beansprucht, wobei das gefrorene Konfekt belüftet ist.

4. Gefrorenes Konfekt, wie im Anspruch 3 beansprucht, wobei das belüftete gefrorene Konfekt einen Überlauf von 50 bis 135 % aufweist.

5. Gefrorenes Konfekt, wie in irgendeinem der vorhergehenden Ansprüche beansprucht, wobei die Menge der Gefrierpunktserniedriger 25 bis 35 Gewichts-% des gefrorenen Konfekts beträgt.

6. Gefrorenes Konfekt, wie im Anspruch 5 beansprucht, wobei die Menge der Gefrierpunktserniedriger 26 bis 33 Gewichts-% des gefrorenen Konfekts beträgt.

7. Gefrorenes Konfekt, wie in irgendeinem der vorhergehenden Ansprüche beansprucht, wobei das zahlenmittlere Molekulargewicht $<M>_n$ der Gefrierpunktserniedriger 200 bis 230 g mol$^{-1}$ beträgt.

8. Gefrorenes Konfekt, wie im Anspruch 7 beansprucht, wobei das zahlenmittlere Molekulargewicht $<M>_n$ der Gefrierpunktserniedriger 205 bis 220 g mol$^{-1}$ beträgt.

9. Gefrorenes Konfekt, wie in irgendeinem der vorhergehenden Ansprüche beansprucht, wobei die Gefrierpunktserniedriger Erythritol umfassen.

10. Gefrorenes Konfekt, wie im Anspruch 9 beansprucht, wobei das gefrorene Konfekt Erythritol in einer Menge von 0,25 bis 7 Gewichts-% des gefrorenen Konfekts umfasst.

11. Gefrorenes Konfekt, wie in irgendeinem der vorhergehenden Ansprüche beansprucht, wobei die Gefrierpunktserniedriger mindestens 90 Gewichts-% der Gefrierpunktserniedriger Mono-, Di- und Oligosaccharide umfassen.

12. Gefrorenes Konfekt, wie im Anspruch 11 beansprucht, wobei die Gefrierpunktserniedriger mindestens 92 Gewichts-% der Gefrierpunktserniedriger Mono-, Di- und Oligosaccharide umfassen.

13. Gefrorenes Konfekt, wie im Anspruch 12 beansprucht, wobei die Gesamtmenge von Mono-, Di- und Oligosacchariden und Erythritol in den Gefrierpunktserniedrigern mindestens 98 Gewichts-% der Gefrierpunkterniedriger, vorzugsweise 99 bis 100 Gewichts-%, beträgt.

14. Gefrorenes Produkt, umfassend einen Behälter mit einem Produktfach, das das gefrorene Konfekt nach irgendeinem der vorhergehenden Ansprüche 1 bis 13 enthält, wobei das Produktfach einen Produktauslass und eine bewegliche Wand umfasst, durch die eine Dosierkraft übertragen werden kann, um das gefrorene Konfekt durch den Produktauslass zu drücken.

15. Verfahren zur Abgabe eines gefrorenen Konfekts aus einem Behälter, wobei das Verfahren die Schritte umfasst:

(a) Bereitstellen eines gefrorenen Produkts, wie im Anspruch 14 beansprucht; und
(b) Aufbringen von Kraft auf den Behälter, um die Wand zu verformen und um dadurch das gefrorene Konfekt in dem Produktfach zu dem Auslass zu drücken und mindestens einen Teil des gefrorenen Konfekts daraus zu extrudieren.

**Revendications**

1. Confiserie glacée comprenant :

• des abaisseurs du point de congélation en une quantité de 20 à 40 % en poids de la confiserie glacée, dans laquelle le poids moléculaire moyen en nombre $<M>_n$ des abaisseurs du point de congélation est inférieur à 230 g mol$^{-1}$ ; et
• un ester d'acide lactique de mono et/ou diglycéride.

2. Confiserie glacée selon la revendication 1 dans laquelle la quantité de l'ester d'acide lactique de mono et/ou diglycéride est de 0,05 % à 2 % en poids de la confiserie glacée.

3. Confiserie glacée selon l'une quelconque de la revendication 1 ou la revendication 2 la confiserie glacée étant aérée.

4. Confiserie glacée selon la revendication 3, la confiserie glacée ayant un foisonnement de 50 à 135 %.

5. Confiserie glacée selon l'une quelconque des revendications précédentes dans laquelle la quantité d'abaisseurs du point de congélation est de 25 à 35 % en poids de la confiserie glacée.

6. Confiserie glacée selon la revendication 5 dans laquelle la quantité d'abaisseurs du point de congélation est de 26 à 33 % en poids de la confiserie glacée.

7. Confiserie glacée selon l'une quelconque des revendications précédentes dans laquelle le poids moléculaire moyen en nombre $<M>_n$ des abaisseurs du point de congélation est de 200 à 230 g mol$^{-1}$.

8. Confiserie glacée selon la revendication 7 dans laquelle le poids moléculaire moyen en nombre $<M>_n$ des abaisseurs du point de congélation est de 205 à 220 g mol$^{-1}$.

9. Confiserie glacée selon l'une quelconque des revendications précédentes dans laquelle les abaisseurs du point de congélation comprennent de l'érythritol.

10. Confiserie glacée selon la revendication 9, la confiserie glacée comprenant de l'érythritol en une quantité de 0,25 à 7 % en poids de la confiserie glacée.

**11.** Confiserie glacée selon l'une quelconque des revendications précédentes dans laquelle les abaisseurs du point de congélation comprennent au moins 90 % en poids des abaisseurs du point de congélation de mono, di et oligosaccharides.

**12.** Confiserie glacée selon la revendication 11 dans laquelle les abaisseurs du point de congélation comprennent au moins 92 % en poids des abaisseurs du point de congélation de mono, di et oligosaccharides.

**13.** Confiserie glacée selon la revendication 12 dans laquelle la quantité totale de mono, di et oligosaccharides et d'érythritol dans les abaisseurs du point de congélation est d'au moins 98 % en poids des abaisseurs du point de congélation, de préférence de 99 à 100 %.

**14.** Produit congelé comprenant un récipient comprenant un compartiment de produit contenant la confiserie glacée selon l'une quelconque des revendications 1 à 13, dans lequel le compartiment de produit comprend une sortie de produit et une paroi mobile à travers laquelle une force de distribution peut être transmise pour pousser la confiserie glacée à travers la sortie de produit.

**15.** Procédé de distribution d'une confiserie glacée depuis un récipient, le procédé comprenant les étapes de :

(a) fourniture d'un produit congelé selon la revendication 14 ; et
(b) application d'une force sur le récipient pour déformer la paroi et ainsi pousser la confiserie glacée dans le compartiment de produit vers la sortie et extruder au moins une partie de confiserie glacée depuis celui-ci.

## Fig. 1a

## Fig. 1b

## Fig. 1c

# Fig. 2

6

2

60b

5

8

40

50

60a

# Fig. 3

25

23

28

24

30a

29b

20

30b

29a

22

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090208630 A
- WO 2006007921 A1
- WO 2013124193 A
- US 20040161503 A
- WO 03096821 A
- WO 2017133863 A
- US 5893485 A
- WO 2007039158 A
- EP 1449441 A

**Non-patent literature cited in the description**

- *Journal of Food Engineering,* 1997, vol. 33, 221-226